# DEMANDE DE BREVET EUROPEEN

(11) **EP 1 327 745 A1**
(43) Date de publication de la demande: **16.07.2003**
(21) Numéro de dépôt: 03290083.9
(22) Date de dépôt: 14.01.2003
(51) Int. Cl.: E06B 9/68, E06B 9/32, H02P 7/74

(54) **Dispositif pour la commande centralisée d'une installation de volets roulants**

(30) Priorité: 14.01.2002 FR 0200353
(71) Demandeur: Faraguet, Claude, 83600 Les Adrets de l'Esterel (FR)
(72) Inventeur: Faraguet, Claude, 83600 Les Adrets de l'Esterel (FR)
(74) Mandataire: Hud, Robert

(57) **Abrégé**

Chaque volet roulant (VR1 ..... VRn) de l'installation a sa borne de montée (M1 .... Mn) reliée, par une première diode (DM1 .... DMn), à un premier conducteur commun CCM, lesdites premières diodes étant toutes orientées dans le même sens. De plus chaque borne de montée (M1 .... Mn) est reliée, par une seconde diode (DM'1 .... DM'n), à un second conducteur commun (CCM'), lesdites secondes diodes étant toutes orientées dans le sens inverse des premières diodes. Lorsque les conducteurs communs (CCM) et (CCM') sont reliés à l'alimentation électrique par les contacts (SM) et (SM') respectivement, les volets roulants sont commandés de façon centralisée en montée ou en descente.

L'invention s'applique à la commande centralisée d'une installation câblée de volets roulants.

## Description

La présente invention concerne les installations de volets roulants à commandes individuelles motorisées et, plus particulièrement, un dispositif de commande centralisée pour une telle installation.

Comme on peut le constater, les volets roulants sont de plus en plus utilisés pour l'occultation des habitations, qu'il s'agisse des maisons individuelles comme des appartements.

Ces volets roulants sont, aujourd'hui, de plus en plus souvent manoeuvrés au moyen d'un moteur électrique, dont la commande est source de confort pour l'utilisateur, quand on la compare aux commandes par manivelle ou par courroie utilisées jusque là.

Il existe deux grandes catégories de commandes des motorisations de volets roulants :
- les commandes dites « sans fil », par télétransmission (infrarouge ou radio),
- les commandes dites « câblées », par liaison filaire.

Les commandes dites « sans fil » sont évidemment très utilisées lors des rénovations d'habitations. Elles fournissent par ailleurs une solution simple, par l'intermédiaire d'un deuxième canal de transmission, à la centralisation des mouvements c'est-à-dire à l'ouverture ou à la fermeture simultanée de tous les volets roulants d'un espace.

Toutefois, par rapport à la commande « câblée », la commande « sans fil » est onéreuse. De plus, la mise en oeuvre des nombreux appareils de commande qu'elle exige constitue souvent une gêne pour les utilisateurs.

La commande « câblée », assurée localement par un commutateur basculant associé à chaque volet roulant, est l'installation la plus courante, en particulier lorsqu'elle a été choisie dès l'origine. Malheureusement, dans ce cas, l'utilisateur dispose rarement d'une commande centralisée des mouvements des volets roulants, pour des raisons de complexité d'installation et de coût.

La présente invention a pour objet de remédier aux inconvénients mentionnés ci-dessus des systèmes de commande câblée de la motorisation de volets roulants, et de proposer à cet effet un système de commande câblée perfectionné qui, tout en étant d'une grande simplicité et d'un faible coût, permet d'assurer une commande centralisée de la totalité des volets roulants de l'installation, ou au choix d'une partie de ceux-ci.

Selon l'invention, le dispositif de commande centralisée câblée concerne une installation de volets roulants dont chaque volet roulant est commandé en montée et en descente par actionnement manuel d'un commutateur basculant pour relier sélectivement la borne de montée ou de descente du volet roulant à une alimentation électrique alternative, et il se caractérise en ce que chaque volet roulant de l'installation a sa borne de montée reliée par une première diode à un premier conducteur commun pouvant être relié par un premier contact mobile à ladite alimentation électrique, lesdites premières diodes étant toutes disposées dans le même sens, et en ce que chaque volet roulant a sa borne de descente reliée, par l'intermédiaire d'une seconde diode, à un second conducteur commun qui peut également être relié à ladite alimentation électrique par un second contact mobile, lesdites secondes diodes étant aussi toutes disposées dans le même sens.

Avec un tel système de liaison par diodes, la liaison du conducteur commun de montée à l'alimentation électrique par actionnement du contacteur correspondant assure la commande simultanée en montée, par une diode, de chacun des volets roulants. Lorsque le contacteur est ouvert, l'alimentation électrique de la borne de montée de l'un des volet roulants ne peut commander que la montée de celui-ci, car le circuit reliant alors l'alimentation électrique à la borne de montée de chacun des autres volets roulants comprend en série deux diodes orientées en sens opposés empêchant tout passage du courant. L'effet est le même pour la commande centralisée de descente des volets roulants.

Avec la disposition selon l'invention ci-dessus d'une diode entre la borne de montée ou de descente de chaque volet roulant et un conducteur commun correspondant, l'effet redresseur de la diode fait que, en commande centralisée, le moteur de chaque volet roulant est alimenté en mono-alternance et donc que l'ensemble des volets roulants de l'installation est entraîné, en montée ou en descente, à vitesse sensiblement moitié.

Certains moteurs ne supportant pas ou supportant mal une alimentation en mono-alternance, la présente invention prévoit alors que la borne de montée (ou de descente) de chaque volet roulant soit reliée par une première diode à un premier conducteur commun et par une seconde diode à un second conducteur commun, les premières diodes étant toutes disposées dans un même sens et les secondes diodes étant toutes disposées dans un même sens qui est inverse de celui des premières diodes. Chaque conducteur commun pouvant être relié à l'alimentation électrique par un contacteur.

Avec cette disposition, lorsque les deux contacteurs sont fermés, la borne de montée (ou la borne de descente) de chaque volet roulant se trouve alimentée à travers deux diodes orientées en sens inverse l'une de l'autre et disposées en parallèle, de sorte que chaque moteur de volet roulant est alimenté en double alternance, chacune des deux diodes en parallèle transmettant une alternance.

L'invention concerne aussi un coffret de commande centralisée, incorporant le dispositif selon la présente invention et auquel viennent se connecter d'une part les câbles reliés à la borne de montée et à la borne de descente de chacun des volets roulants de l'installation, et d'autre part les câbles d'alimentation électrique.

Pour bien faire comprendre l'invention, on en décrira ci-après, des formes de réalisation préférées en référence aux dessins schématiques annexés dans lesquels :
la figure 1 est, au titre de l'art antérieur, un schéma montrant le circuit électrique d'un système connu de commande centralisée câblée d'une installation de volets roulants ;
la figure 2 est un schéma explicatif de l'action de redresseur d'une diode disposée dans un circuit soumis à une tension alternative ;
les figures 3 et 4 sont des schémas explicatifs de l'action de deux diodes disposées « tête-bêche » dans un circuit soumis à une tension alternative, respectivement lorsque ces diodes sont montées en série et en parallèle ;
la figure 5 est un schéma montrant la disposition d'un ensemble de diodes placé entre la sortie « montée » de chaque volet roulant et un conducteur commun destiné à être relié au secteur, selon une première forme de réalisation de la commande centralisée de l'invention ;
la figure 6 est schéma électrique d'une installation de volets roulants équipée d'une commande centralisée de la montée et de la descente des volets roulants selon la première forme de réalisation de l'invention de la figure 5 ;
la figure 7 est un schéma similaire à celui de la figure 5, montrant la disposition d'un double ensemble de diodes placé entre la sortie « montée» de chaque volet roulant et deux conducteurs communs destinés à être reliés au secteur, selon une seconde forme de réalisation de l'invention ;
la figure 8 est schéma électrique, analogue à la figure 6, d'une installation de volets roulants à commande centralisée selon la seconde forme de réalisation de l'invention de la figure 7 ;
la figure 9 est un schéma de câblage du dispositif de commande individuelle et centralisée de l'installation de volets roulants selon la seconde forme de réalisation de l'invention ;
la figure 10 est le schéma de connectique d'un coffret de commande centralisée utilisable selon la seconde forme de réalisation de l'invention ; et
la figure 11 est une vue de face du tableau d'actionnement constituant la porte du coffret de commande de la figure 10.

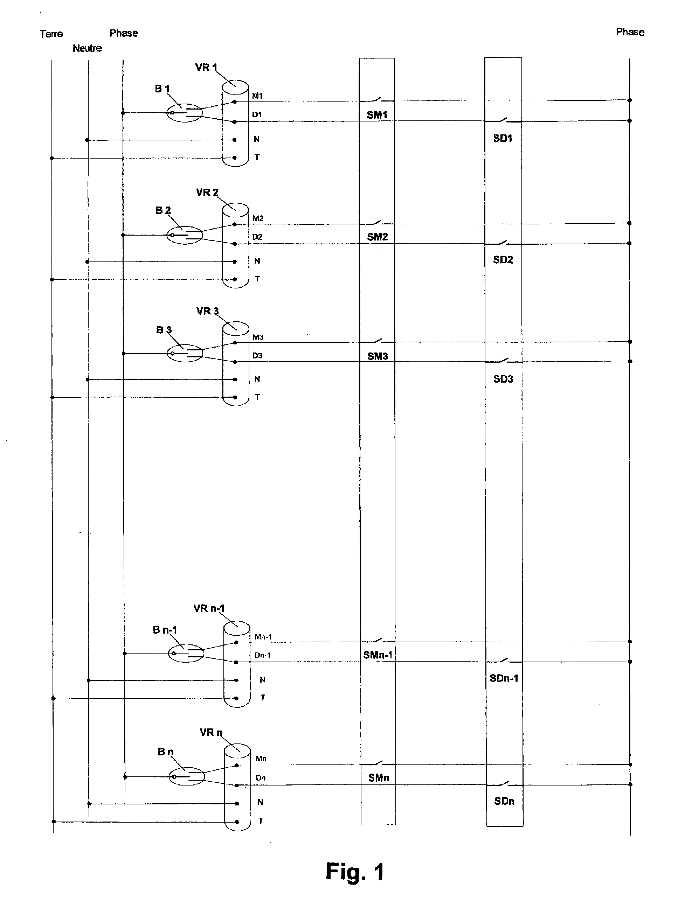

A la figure 1 on a représenté un système connu de commande centralisée câblée d'une installation de n volets roulants désignés par VR1, VR2, VR3 ....., VRn-1 et VRn. Chaque volet roulant de l'installation, par exemple VR1, a ses bornes de montée VR3 et de descente D1 sélectivement reliées, par l'intermédiaire d'un commutateur basculant manuel B1, à la phase de l'alimentation électrique. Le commutateur B1, dans sa position en contact avec la borne M1, assurant la montée indépendante du volet VR1 et, dans sa position en contact avec la borne D1, assurant la descente indépendante de ce volet, alors que dans la position intermédiaire de B1 le volet n'est pas actionné. Les bornes N et T de chaque volet roulant sont reliées respectivement au neutre et à la terre de l'alimentation électrique.

De plus, chaque borne de montée M1, M2..... Mn des volets roulants de l'installation est reliée, par l'intermédiaire d'un contact de montée, respectivement SM1, SM2,..... SMn, à la phase de l'alimentation électrique et, de façon similaire, chaque borne de descente D1, D2 ..... Dn est reliée par l'intermédiaire d'un contact de descente, respectivement SD1, SD2..... SDn, à la phase de l'alimentation électrique. On comprend que, par un système de relayage classique ou par un automate, l'actionnement simultané des n contacts de montée SM1,..... SMn assure la commande centralisée de la montée des n volets roulants et que de façon similaire l'actionnement simultané des n contacts de descente SD1 ..... SDn assure la commande centralisée de la descente des n volets roulants.

Ce système connu de commande centralisée exige donc l'utilisation de 2n contacts (n étant le nombre de volets roulants de l'installation), et il est de ce fait coûteux et d'une mise en place relativement complexe ce qui explique qu'une telle installation est assez rarement proposée.

Partant du constat que, dans un système de commande centralisée câblée d'une installation de volets roulants dans laquelle chaque volet roulant comporte une commande individuelle indépendante, les sorties de montée ou de descente des volets roulants doivent être isolées les unes des autres pour la commande individuelle à partir des commutateurs basculants manuels, et qu'il faut momentanément réunir toutes les sorties de montée ou de descente pour effectuer le mouvement centralisé vers le haut ou vers le bas de tous les volets roulants, l'invention propose d'utiliser un système de diodes pour assurer la liaison entre chaque sortie (de montée ou de descente) de chacun des volets roulants et l'alimentation électrique.

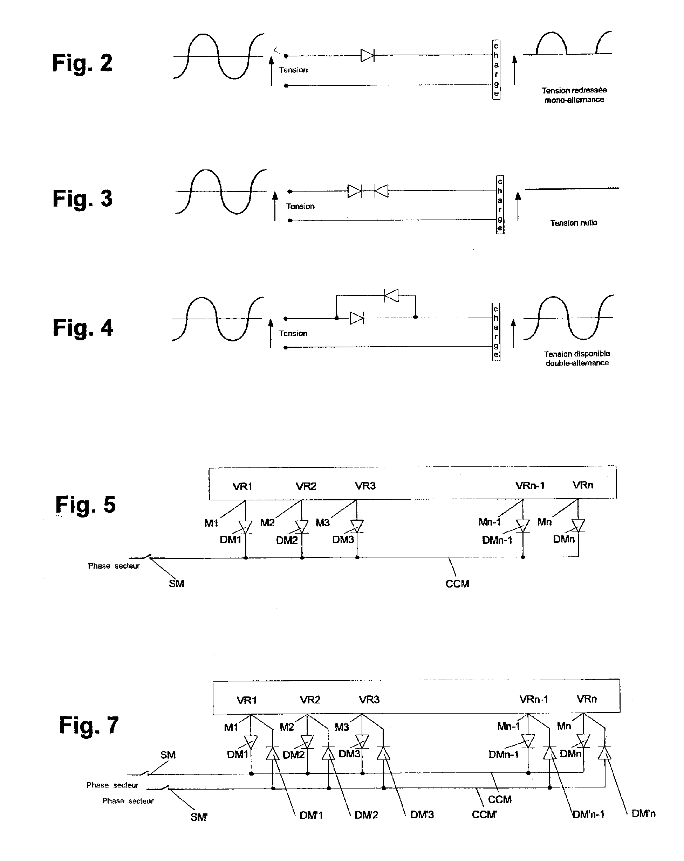

On sait en effet (voir figure 2) qu'une diode agit comme un redresseur en transformant une tension alternative bi-alternance qui lui est appliquée en une tension redressé mono-alternance. On sait également (voir figure 3) que, lorsque deux diodes orientées en sens inverse sont disposées en série, elles s'opposent au passage des deux alternances de la tension alternative qui lui est appliquée, en équivalence avec un circuit ouvert. Enfin, si les deux diodes sont disposées en sens inverse mais en parallèle (voir figure 4), la tension disponible aux bornes du circuit est alors une tension alternative bi-alternance, (quasiment identique à la tension appliquée au circuit). Le circuit ainsi constitué est équivalent à un court-circuit.

Pour la réalisation du système de commande centralisée câblée d'une installation de volets roulants comportant chacun une commande individuelle indépendante, la présente invention propose, comme on le voit à la figure 5, de relier la sortie de montée M1, M2..... Mn de chacun des volets roulants VR1, VR2, ..... VRn à un conducteur commun CCM par l'intermédiaire d'une diode, respectivement DM1, DM2..... DMn, en formant ainsi un ensemble de diodes en forme de râteau disposées toutes dans le même sens. On comprend que pour réaliser la montée simultanée de tous les volets roulants, il suffit d'appliquer le secteur au conducteur commun CCM de l'ensemble de diodes en fermant le commutateur SM. chaque sortie de montée des volets roulants se trouve alors alimentée au travers d'une diode et les moteurs des n volets roulants sont alimentés en mono-alternance en assurant une montée simultanée des volets roulants qui s'effectue à peu près deux fois moins vite qu'en commande individuelle par les commutateurs basculants.

Par contre, lorsque le commutateur SM est ouvert, la commande individuelle de l'un quelconque des volets roulants par exemple VR1 peut être assurée sans commander la montée des autres volets roulants, car les bornes de montée sont isolées les unes des autres par la disposition en sens inverse en série de la diode DM1 associée au volet roulant VR1 avec les diodes associées à chacun des autres volets roulants.

On comprend que la commande centralisée de la descente des volets roulants s'obtient de la même façon en reliant la sortie de descente D1, D2, ..... Dn de chaque volet roulant, par une diode DD1, DD2, ..... DDn, à un conducteur commun CCD pouvant être sélectivement relié au secteur.

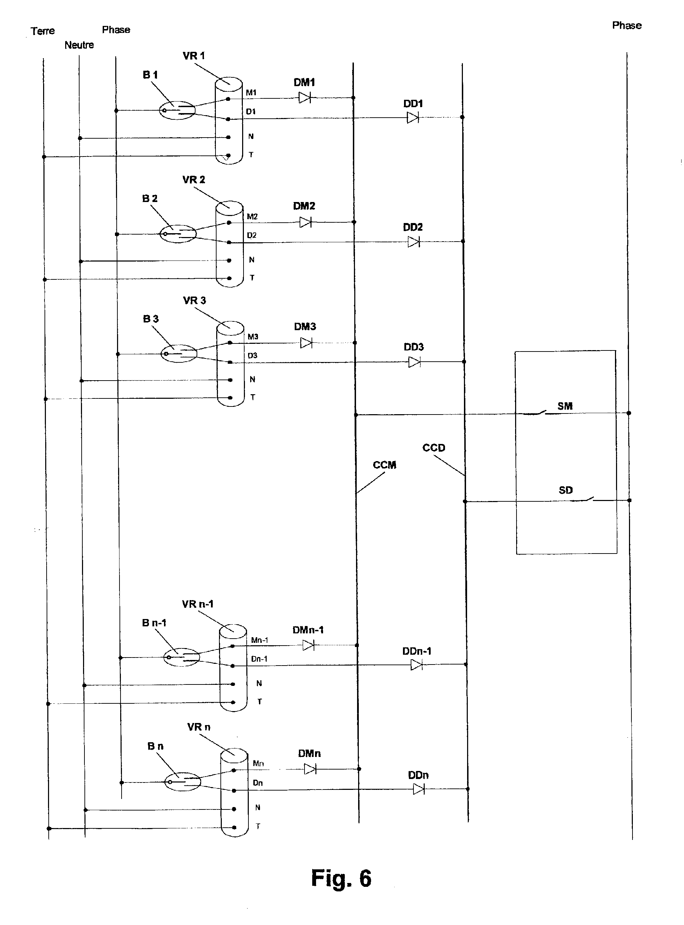

A la figure 6, on a représenté le schéma électrique d'un tel système de commande centralisée câblée, pour la montée et pour la descente, d'une installation de volets roulants, utilisant pour chacun de ces deux mouvements un ensemble de diodes en râteau et fonctionnant en mono-alternance. On voit qu'un tel système est d'une grande simplicité et ne nécessite l'utilisation que de deux contacts (le contact montée et le contact descente), au lieu de 2n contacts dans le système connu de la figure 1, et de 2n diodes qui sont des éléments d'un faible coût, en étant donc peu dispendieux.

On a vu que, dans la réalisation des figures 5 et 6, les moteurs des volets roulants sont alimentés en mono-alternance lorsqu'ils sont commandés de façon centralisée.

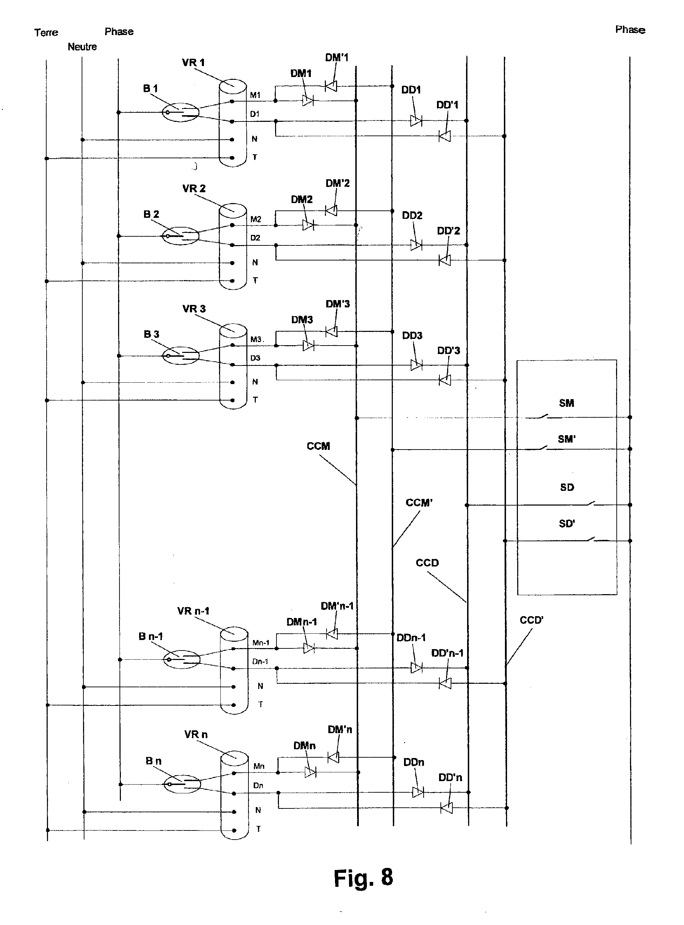

Il a toutefois été constaté que certains moteurs n'acceptent pas, ou acceptent mal, d'être commandés en mono-alternance. L'invention propose alors, selon une autre forme de réalisation schématisée à la figure 7 et représentée plus en détail à la figure 8, non seulement de relier la sortie de montée de chaque volet roulant VR à un conducteur commun CCM par une première diode DM, mais aussi de relier cette sortie à un autre conducteur commun CCM' par une seconde diode DM' disposée en sens inverse de DM. Chacun des conducteurs communs CCM et CCM' est relié par un contacteur, respectivement SM et SM', à l'alimentation électrique.

La commande centralisée de la montée de l'ensemble des volets roulants s'effectue par fermeture simultanée des contacteurs SM et SM' pour relier les deux conducteurs communs à l'alimentation électrique. Chaque volet roulant, par exemple VR1, se trouve alors alimenté selon la disposition de la figure 4 c'est-à-dire par l'intermédiaire de deux diodes DM1 et DM'1 disposées en sens inverses et en parallèle, c'est-à-dire en bi-alternance, comme si ce volet roulant était relié directement à l'alimentation électrique.

Une disposition similaire comprenant un double ensemble de diodes DD et DD' est utilisée de la même façon pour relier la borne de descente D de chacun des volets roulants à deux conducteurs communs CCD et CCD', chacun relié à l'alimentation électrique par un contacteur respectivement SD et SD', comme on le voit sur le schéma électrique de cette seconde forme de réalisation de l'invention représenté à la figure 8. Cette forme de réalisation nécessite alors quatre contacts et 4 x n diodes, en restant encore plus simple et moins coûteuse que la disposition connue de commande centralisée représentée à la figure 1.

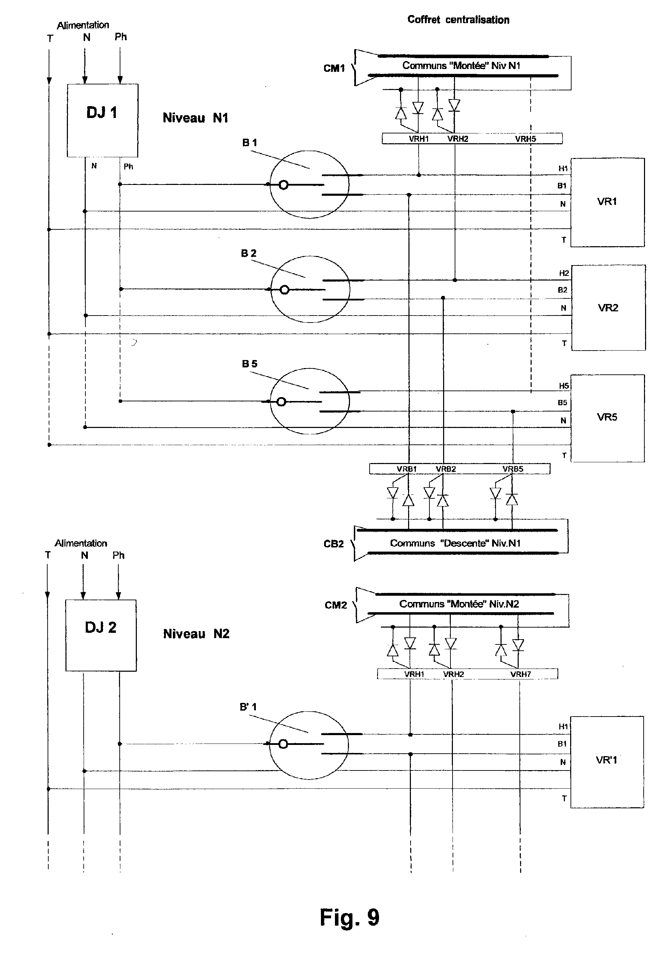

A la figure 9 on a donné le schéma partiel de câblage d'un exemple d'installation de volets roulants comprenant une commande centralisée câblée de la montée et de la descente de ces volets roulants selon la seconde forme de réalisation de l'invention. Cette installation comprend un ensemble de sept volets roulants (dont un seul VR'1 est figuré) à un niveau N2 et un ensemble de cinq volets roulants à un niveau N1 dont trois (parmi lesquels seuls deux VR1 et VR2 sont figurés) sont commandés de façon centralisée en montée et en descente, alors que les deux autres (dont un seul VR5 est figuré) ne sont commandés de façon centralisée qu'en descente. Dans ce cas, au niveau N1, deux des volets roulants (dont VR5) n'ont pas leur borne de montée reliée à l'alimentation électrique par l'intermédiaire de deux diodes disposées en sens inverses et en parallèle.

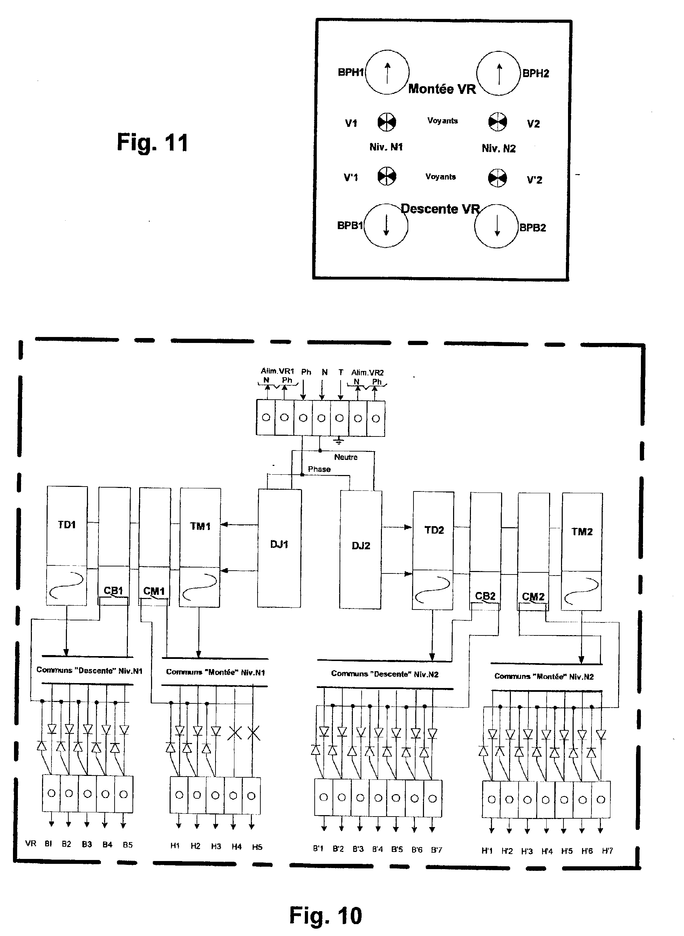

Aux figures 10 et 11 on a représenté respectivement la connectique et la porte formant tableau de commande, d'un coffret contenant le système de commande de l'installation de la figure 9. Comme on le voit à la figure 10, le coffret comprend des bornes de connexion H'1 , H'2, ..... H'7 reliées, par l'intermédiaire d'un double ensemble de diodes et de deux conducteurs communs, à un contacteur à deux contacts CM2 et à une minuterie temporisée de montée TM2, à chacune de ces bornes venant se connecter le câble provenant de la borne de montée de l'un des sept volets roulants VR'1 à VR'7 du niveau N2. Le contacteur de montée CM2 et la minuterie de montée TM2 sont reliés à l'intérieur du coffret, par l'intermédiaire d'un disjoncteur DJ2, à des bornes de connexion phase et neutre auxquelles sont destinées à venir se connecter les câbles correspondants de l'alimentation électrique.

De même le coffret comporte des bornes de connexion B'1 à B'7, auxquelles sont destinés à venir se connecter les câbles provenant des bornes de descente des volets roulants VR'1 à VR'7. Ces bornes B'1 à B'7 sont reliées à l'intérieur du coffret, par un double ensemble de diodes, par deux conducteurs communs auxquels ce double ensemble de diodes est relié et par un contacteur de descente à deux contacts CB2 (auquel est associée une minuterie temporisée de descente TD2), aux bornes de connexion phase et neutre du coffret (par l'intermédiaire du disjoncteur DJ2).

De façon similaire, des bornes de connexion B1 à B5, auxquelles sont destinés à être connectés les câbles provenant des bornes de descente des cinq volets roulants VR1 ..... VR5 du niveau 1 sont reliées à l'intérieur du coffret, par un double ensemble de diodes, par deux conducteurs communs et par un contacteur à deux contacts CB1 de descente, aux bornes de connexion d'alimentation phase et neutre, par l'intermédiaire d'un disjoncteur DJ1 du niveau 1. Et trois bornes de connexion H1, H2, H3, auxquelles sont destinés à être connectés les câbles provenant des bornes de montée des trois volets roulants VR1, VR2, VR3 du niveau 1 prévus pour subir une commande de montée centralisée, sont reliées à l'intérieur du coffret, par un double ensemble de diodes, par deux conducteurs communs et par un contacteur à deux contacts CM1 de montée (auquel est associée une minuterie de temporisation TM1), aux bornes de connexion phase et neutre d'alimentation par l'intermédiaire du disjoncteur DJ1. Les bornes de connexion H4 et H5, auxquelles sont destinés à être connectés les câbles provenant des bornes de montée des deux volets roulants VR4 et VR5 pour lesquels la commande centralisée de la montée n'est pas prévue, ne sont pas reliées à l'alimentation électrique.

La porte du coffret représentée à la figure 11, qui forme tableau de commande, comporte à sa partie supérieure deux boutons poussoirs BPH1 et BPH2 , dont l'actionnement commande respectivement la fermeture du contacteur CM1 ou CM2, permet la commande centralisée en montée respectivement de trois des cinq volets roulants du niveau N1 et des sept volets roulants du niveau N2. Un voyant respectivement V1 et V2 est associé à chacun de ces deux boutons poussoirs.

A sa partie inférieure la porte du coffret comporte aussi deux autres boutons poussoirs BPB1 et BPB2, dont l'actionnemen commande respectivement la fermeture du contacteur CB1 ou CB2, en assurant la commande centralisée en descente respectivement des cinq volets roulants du niveau N1 et des sept volets roulants du niveau N2. Un voyant respectivement V'1 et V'2 est associé à chacun de ces deux boutons poussoirs BPB1 et BPB2.

Comme on le voit à la figure 10, le coffret de commande comporte, de chaque côté des bornes « phase », « neutre » et « terre » destinées à être connectées aux câbles d'alimentation électrique, des bornes à partir desquelles sont alimentés d'une part les commutateurs basculants commandant individuellement la montée ou la descente des volets roulants du niveau N1 et d'autre part les commutateurs basculants commandant individuellement la montée ou la descente des volets roulants du niveau N2. Par un système connu de contacteurs (non représenté), chacune de ces alimentations des commutateurs de commande individuelle des volets roulants du niveau N1 ou du niveau N2 est automatiquement interrompue pendant la durée de l'actionnement centralisé (en montée ou en descente) des volets roulants du niveau correspondant. Ainsi, pendant l'action centralisatrice, tous les commutateurs basculants sont ainsi inhibés en évitant toute action perturbatrice par leur intermédiaire.

On comprendra que la description ci-dessus a été donnée à simple titre d'exemple, sans caractère limitatif, et que des adjonctions ou des modifications constructives pourraient y être apportées sans sortir du cadre de la présente invention.

## Revendications

1. Dispositif pour la commande centralisée câblée d'une installation de volets roulants dont chaque volet roulant (VR1 ..... VRn) est commandé en montée et en descente par actionnement manuel d'un commutateur basculant (B1 ..... Bn) pour relier sélectivement la borne de montée (M1 ..... Mn) ou de descente (D1 ..... Dn) du volet roulant à une alimentation électrique alternative, **caractérisé en ce que** chaque volet roulant (VR1 ..... VRn) de l'installation a sa borne de montée (M1 ..... Mn) reliée, par l'intermédiaire d'une première diode (DM1 ..... DMn), à un premier conducteur commun (CCM) pouvant être relié par un premier contact mobile (SM) à ladite alimentation électrique, lesdites premières diodes (DM1 ..... DMn) étant toutes disposées dans le même sens, chaque volet roulant ayant sa borne de descente (D1 ... Dn) reliée, par l'intermédiaire d'une seconde diode (DD1 ..... DDn), à un second conducteur commun (CCD) qui peut également être relié à ladite alimentation électrique par un second contact mobile (SD), lesdites secondes diodes (DD1 ..... DDn) étant aussi disposées toutes dans le même sens.

2. Dispositif selon la revendication 1, **caractérisé en ce que** chaque volet roulant (VR1 .... VRn) a sa borne de montée (M1 .... Mn) et sa borne de descente (D1 .... Dn) reliées de plus, respectivement, par une diode supplémentaire (DM'1 .... DM'n, DD'1 .... DD'n) disposée en sens inverse de ladite première diode (DM1 .... DMn) ou seconde diode (DD1 .... DDn), à un conducteur commun de montée supplémentaire (CCM') et à un conducteur commun de descente supplémentaire (CCD'), respectivement, chacun de ces conducteurs communs supplémentaires pouvant être relié à l'alimentation électrique par un contact mobile supplémentaire (SM', SD').

3. Dispositif selon la revendication 1 ou la revendication 2, **caractérisé en ce que** la liaison par diode de la borne de montée (M) ou de descente (D)d'au moins un volet roulant (VR)de l'installation avec le conducteur commun (CC)correspondant est supprimée, en supprimant ainsi l'ouverture ou la fermeture de ce volet roulant (VR) lors de la commande centralisée de montée ou de descente.

4. Dispositif selon l'une quelconque des revendications 1 à 3 pour une installation de volets roulants comprenant plusieurs ensembles de volets roulants dont chaque ensemble comporte une commande centralisée, **caractérisé en ce que** les bornes de montée (M) et de descente (D) des volets roulants de chaque ensemble sont seules reliées par diodes à des conducteurs communs (CC) qui sont indépendants de ceux correspondant aux autres ensembles.

5. Coffret de commande centralisée câblée d'une installation de volets roulants comprenant un dispositif selon l'une quelconque des revendications 1 à 4, présentant des bornes de connexion d'actionnement (H1 .... Hn, B1 .... Bn) sur lesquelles sont destinés à se brancher des câbles provenant des bornes de montée (M1 .... Mn) et de descente (D1 .... Dn) de chacun des volets roulants (VR1 .... VRn) de l'installation, et des bornes de connexion d'alimentation sur lesquelles sont destinés à se brancher des câbles d'alimentation électrique, **caractérisé en ce qu'**il comprend au moins un premier ensemble de diodes reliant des bornes de connexion d'actionnement de montée (H1 .... Hn) à au moins un premier conducteur commun (CCM), un commutateur de montée (CM) relié d'une part au dit premier conducteur commun (CCM) et d'autre part aux dites bornes de connexion d'alimentation, au moins un second ensemble de diodes reliant des bornes de connexion d'actionnement de descente (B1 .... Bn) à au moins un second conducteur commun (CCD), un commutateur de descente (CB) étant relié d'une part au dit second conducteur commun (CCD) et d'autre part aux dites bornes d'alimentation électrique.

6. Coffret selon la revendication 5, **caractérisé en ce qu'**il présente une porte formant tableau de commande, portant deux boutons poussoirs (BPH, BPB)dont l'actionnement assure respectivement la fermeture du contacteur de montée (CM) et la fermeture du contacteur de descente (CB).

7. Coffret selon la revendication 6, **caractérisé en ce qu'**une minuterie temporisée (TM, TD) est associée à chacun des dits contacteurs (CM, CB).

8. Coffret selon l'une quelconque des revendications 5 à 7, **caractérisé en ce qu'**il comprend des bornes d'alimentation interruptibles pour l'alimentation des commutateurs basculants (B1 ..... Bn) de commande individuelle des volets roulants (VR1 ..... VRn), de sorte que l'alimentation des dits commutateurs basculants (B1 ... Bn) est automatiquement interrompue pendant l'actionnement centralisé de montée ou de descente des volets roulants.
